# EUROPÄISCHE PATENTSCHRIFT

(11) **EP 0 993 696 B1**
(45) Veröffentlichungstag und Bekanntmachung des Hinweises auf die Patenterteilung: **06.02.2008**
(21) Anmeldenummer: 98966771.2
(22) Anmeldetag: 11.12.1998
(51) Int. Cl.: H02K 23/66, H02K 5/14, H02K 11/02, H02K 7/116

(54) **ANTRIEBSVORRICHTUNG, INSBESONDERE ZUM VERSTELLEN EINES SCHIEBEDACHS EINES FAHRZEUGS**
DRIVE, IN PARTICULAR FOR ADJUSTING A VEHICLE SLIDING ROOF
DISPOSITIF DE COMMANDE, NOTAMMENT POUR LE REGLAGE DU TOIT OUVRANT D'UN VEHICULE

(30) Priorität: 10.02.1998 DE 19805185
(43) Veröffentlichungstag der Anmeldung: 19.04.2000
(73) Patentinhaber: ROBERT BOSCH GMBH, 70442 Stuttgart (DE)
(72) Erfinder: KLAPPENBACH, Christoph, D-77815 Bühl (DE); SPINNER, Klaus, D-77815 Bühl (DE); HEITZ, Robert, D-77830 Bühlertal (DE); HILS, Alois, D-77880 Sasbach (DE); BÄUERLE, Christian, D-77815 Buhl (DE); DREIER, Friedrich-Wilhelm, Interlagos, Sao Paulo, S.P 04783-040 (BR)
(86) Internationale Anmeldenummer: PCT/DE1998/003637
(87) Internationale Veröffentlichungsnummer: WO 1999/041824

(56) Entgegenhaltungen:
- EP-A- 0 474 904
- PATENT ABSTRACTS OF JAPAN vol. 097, no. 009, 30. September 1997 -& JP 09 131034 A (AISIN SEIKI CO LTD), 16. Mai 1997
- PATENT ABSTRACTS OF JAPAN vol. 096, no. 005, 31. Mai 1996 -& JP 08 019204 A (AISIN SEIKI CO LTD), 19. Januar 1996

## Beschreibung

### Stand der Technik

Die Erfindung geht aus von einer Antriebsvorrichtung, insbesondere zum Verstellen eines Schiebedachs eines Fahrzeugs nach der Gattung des Anspruchs 1. Es ist bereits eine Antriebsvorrichtung bekannt (EP-PS 0 474 904), die zum Antrieb eines Fensterhebers dient. Die Antriebsvorrichtung besitzt ein einstückig spritzgegossenes Basisgehäuse, das sich aus einem Getriebegehäuse und einem Elektronikgehäuse zusammensetzt. An dem Basisgehäuse, das von einem Gehäusedeckel verschlossen ist, ist ein Elektromotor angebracht, der einen Anker aufweist. Der Anker ist in einem topfförmigen Polgehäuse untergebracht, das mit seiner offenen Stirnseite an dem Basisgehäuse angeschraubt wird. Der Anker besitzt außerdem einen Kommutator, der außerhalb des Polgehäuses im Basisgehäuse liegt. Ein sich an den Kommutator anschießender Endbereich des Ankers ist dabei in Form einer Getriebeantriebswelle für ein Getriebe ausgebildet und hat dabei zum Beispiel die Form einer Schneckenwelle. Des weiteren ist eine Leiterplatte im Basisgehäuse untergebracht, die einen schmalen Steg aufweist, der seitlich von der Leiterplatte wegsteht. An dem Steg ist ein Bürsten tragender Bürstenhalter angebracht. Außerdem erstreckt sich die Leiterplatte mit ihrer größten Erstreckung quer zu einer Ankerwelle des Ankers.

Darüber hinaus weist die Leiterplatte einen Anschlußteil auf, der als Steckeraufnahme ausgebildet ist. Die Montage der Antriebsvorrichtung erfolgt derart, daß zunächst die Leiterplatte in das Getriebegehäuse bzw. Basisgehäuse eingebracht und dort befestigt wird. Anschließend erfolgt die Montage des im Polgehäuse untergebrachten Ankers, wofür es erforderlich ist, den Anker mit seinem Kommutator in den Bürstenhalter zwischen den Bürsten einzufädeln. Eine endgültige Fixierung der Lage des Bürstenhalters erfolgt nach dem Befestigen des Polgehäuses und erst nach einer genauen Justage des Bürstenhalters, wozu der Bürstenhalter mittels Schrauben an der Leiterplatte fest verschraubt wird. Eine exakte Positionierung des Bürstenhalters bzw. der an dem Kommutator anliegenden Bürsten ist erforderlich, da ansonsten kein einwandfreier Betrieb der Antriebsvorrichtung gewährleistet werden kann. Die geschilderte Montagemethode erfordert nicht nur einiges Geschick, sondern sie ist auch einer maschinellen Montage der Antriebsvorrichtung hinderlich. Außerdem ergibt sich, da der Bürstenhalter nur an einem schmalen Steg der Leiterplatte angebracht ist, eine geringe mechanische Stabilität und eine aufwendige und damit hohe Kosten verursachende Herstellungsweise der Leiterplatte.

### Vorteile der Erfindung

Die erfindungsgemäße Antriebsvorrichtung mit den kennzeichnenden Merkmalen des Anspruchs 1 hat demgegenüber den Vorteil einer vereinfachten Montage sowie einer besonders platzoptimierten Ausbildung und Anordnung der Leiterplatte in der Antriebsvorrichtung. Von besonderem Vorteil ist dabei, daß eine Justage des Bürstenhalters entfallen kann. Darüber hinaus ist auch eine einfache Demontage des Bürstenhalters mit den Bürsten möglich.

Durch die in den Unteransprüchen aufgeführten Maßnahmen sind vorteilhafte Weiterbildungen und Verbesserungen der im Anspruch 1 angegebenen Antriebsvorrichtung möglich.

Von Vorteil ist weiterhin, daß der Bürstenhalter und eine vorgesehene Steckeraufnahme sowohl einteilig als gemeinsames Bauteil aber auch zweiteilig ausgebildet werden können, um so flexibel verschiedensten Anforderungen an Lage und Gestaltung der Steckeraufnahme bei einer Massenherstellung erfüllen zu können. Von weiterem Vorteil ist eine vereinfachte Montage, die sich dadurch ergibt, daß die Bürsten während der Endmontage des Ankers in einer hinteren Stellung verbleiben, um erst nach der Endmontage, zum Beispiel eines Getriebedeckels, gezielt zu entrasten. Von besonderem Vorteil ist außerdem, daß sogenannte Hall-Sensoren, die in Verbindung mit einem am Anker angebrachten Magnetring die Drehzahl der Antriebsvorrichtung erfassen können, in besonders vorteilhafter Weise auf der Leiterplatte plaziert werden können. Von weiterem Vorteil ist, daß erforderliche Entstörelemente direkt im Bürstenhalter integriert werden können, wodurch sich die Effizienz der Entstörmaßnahmen aufgrund der räumlichen Nähe zu den Bürsten erhöht. Besonders vorteilhaft ist, daß mit im Bürstenhalter integrierten Entstörspulen zugleich eine elektrische Kontaktierung der Bürsten zu vorgesehenen elektrischen Bauteilen auf der Leiterplatte hergestellt werden kann. Vorteilhaft ist außerdem, daß sich durch die rechteckförmige Form der Leiterplatte ein bei der Herstellung der Leiterplatten erforderlicher Verschnitt reduzieren läßt, wodurch sich die Herstellungskosten der Leiterplatte verringern lassen.

### Zeichnung

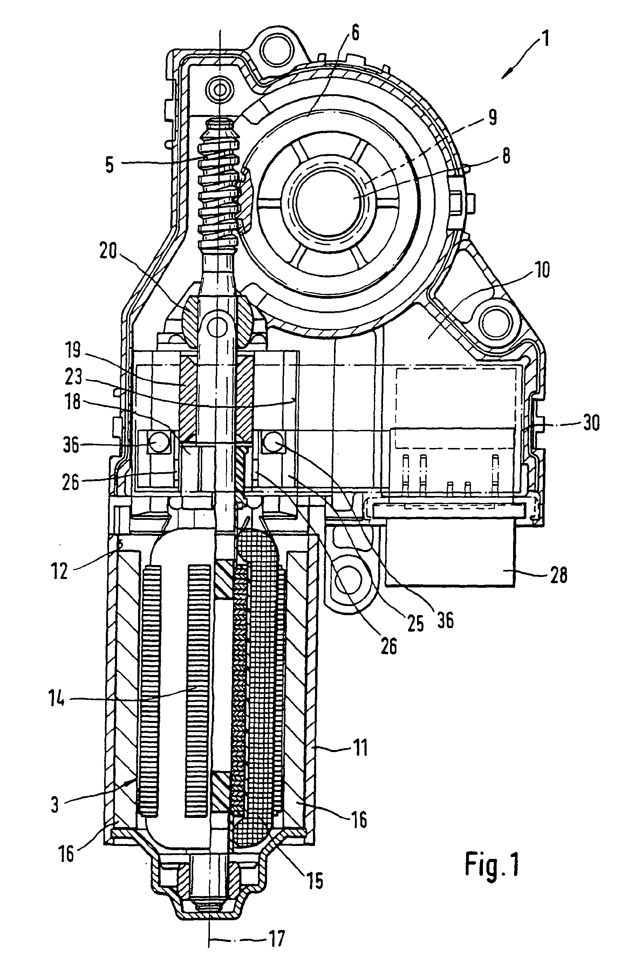

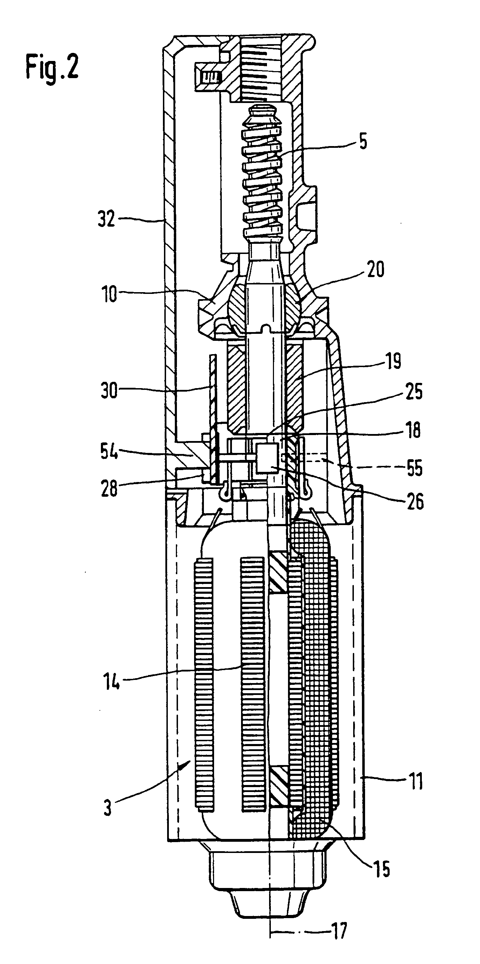

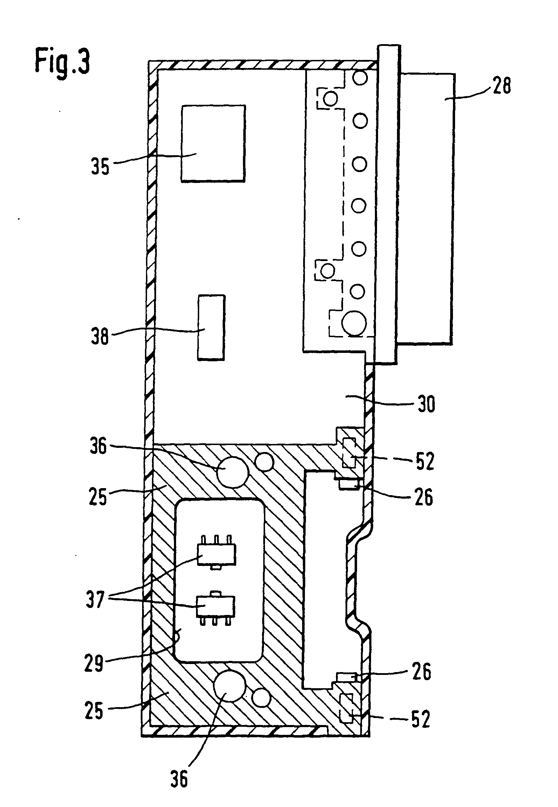

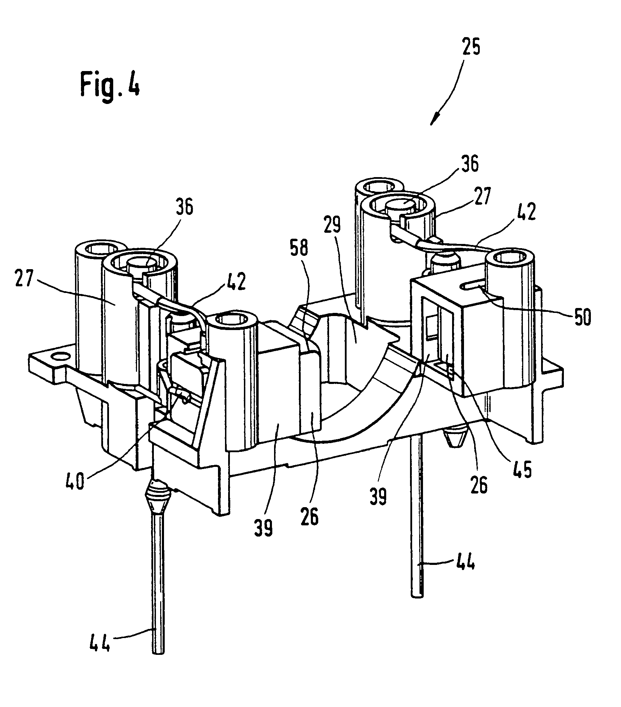

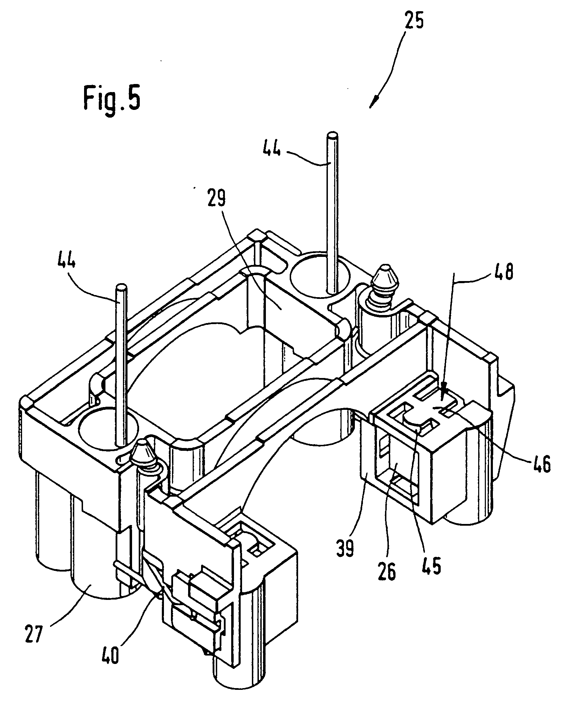

Die in den Figuren 1 bis 5 dargestellten Vorrichtungen bilden nicht Teil der Erfindung, dienen aber zu deren besseren Verständnis. Sie sind in der Zeichnung vereinfacht dargestellt und in der nachfolgenden Beschreibung näher erläutert. Es zeigen Figur 1 eine Draufsicht einer teilweisen Schnittdarstellung einer Antriebsvorrichtung, Figur 2 eine Seitenansicht einer teilweisen Schnittdarstellung der Antriebsvorrichtung nach Figur 1, Figur 3 eine Leiterplatte mit einem Bürstenhalter, Figur 4 eine perspektivische Darstellung einer Vorderansicht des Bürstenhalters nach Figur 3, Figur 5 eine Unteransicht einer perspektivischen Darstellung des Bürstenhalters nach Figur 4.

### Beschreibung der Ausführungsbeispiele

In Figur 1 ist in teilweiser Schnittdarstellung eine Antriebsvorrichtung 1 dargestellt, die sich insbesondere zum Verstellen eines Schiebedachs eines Fahrzeugs, insbesondere eines Kraftfahrzeugs, eignet. Die Antriebsvorrichtung 1 besitzt hierzu einen Elektromotor 3, der über ein Untersetzungsgetriebe verfügt, das beispielsweise aus einer Schneckenwelle 5 und einem mit der Schneckenwelle 5 kämmenden Schneckenrad 6 besteht. Das Schneckenrad 6 steht in drehfester Verbindung zu einem an einer Welle 8 angebrachten, in Figur 1 gestrichelt eingezeichneten Antriebsritzel 9, das seinerseits über einen nicht näher dargestellten Mechanismus ein nicht näher dargestelltes Schiebedach des Fahrzeugs öffnen oder schließen kann. Über einen Entkoppelmechanismus, der zum Beispiel aus einem nicht näher dargestellten Mitnehmerstift besteht, der von einem Werkzeug entsprechend betätigt werden kann, ist es möglich, die drehfeste Verbindung des Schneckenrades 6 zu dem Antriebsritzel 9 zu unterbrechen. Das Untersetzungsgetriebe 5, 6 ist in einem Getriebegehäuse 10 untergebracht, das zum Beispiel als Metalldruckgußteil ausgebildet ist. Das Getriebegehäuse 10 ist an einem topfförmig ausgebildeten Polgehäuse 11 des Elektromotors 3 angeflanscht. In dem Polgehäuse 11 ist ein Anker 14 drehbar untergebracht, der in bekannter Weise über Spulen 15 verfügt, die mit im Innern des Polgehäuses 11 an einer Innenwand 12 angebrachten Permanentmagneten 16 zusammenwirken, um im bestromten Zustand der Spulen 15 eine Drehung des Ankers 14 zu bewirken. Der Anker 14 besitzt zur Bestromung seiner Spulen 15 an seinem außerhalb des Polgehäuses 11 im Getriebegehäuse 10 liegenden Teil einen Kommutator 18 bekannter Bauart, der mit zum Beispiel zwei Bürsten 26, insbesondere Kohlebürsten, zusammenwirkt. An den Kommutator 18 schließt sich in Richtung zum Schneckenrad 6 hin ein Magnetring 19 an. An den Magnetring 19 schließt sich weiter in Richtung zum Schneckenrad 6 hin ein Lager 20 für den Anker 14 an, von dem aus ein Endbereich des Ankers 14 in Form einer Getriebeantriebswelle, zum Beispiel als Schneckenwelle 5 ausgebildet ist.

Etwa mittig unterteilt von Kommutator 18 und Magnetring 19 ist eine Ausnehmung 23 im Getriebegehäuse 10 vorgesehen, welche beispielsweise einen rechteckförmigen Querschnitt hat. Die Ausnehmung 23 erstreckt sich in axialer Richtung entlang einer Ankerwelle 17 des Ankers 14 in etwa im Bereich von Kommutator 18 und Magnetring 19. In die Ausnehmung 23 greift ein Bürstenhalter 25 ein, welcher die zumindest zwei Bürsten 26 am Kommutator 18 hält. Der Bürstenhalter 25 hat eine im wesentlichen quaderförmige Form und erstreckt sich in axialer Richtung zumindest über den Kommutator 18. Gemäß einem ersten Ausführungsbeispiel nimmt der Bürstenhalter 25 quer zur Ankerwelle 17 nahezu die gesamte Breite des Getriebegehäuses 10 ein und geht einstückig in einen Kontaktierungsabschnitt über, der zum Beispiel in Form einer Steckeraufnahme 28 ausgebildet ist. Der als ein Bauteil mit der Steckeraufnahme 28 ausgebildete Bürstenhalter 25 hat insgesamt eine L-Form. Die etwas aus dem Getriebegehäuse 10 herausschauende Steckeraufnahme 28 dient zum Anschluß eines nicht näher dargestellten elektrischen Steckers, der zur Stromversorgung der Antriebsvorrichtung 1 die Steckeraufnahme 28 kontaktiert. Der Bürstenhalter 25 ist auf einer in Figur 1 nur strichpunktiert angedeuteten Leiterplatte 30 angebracht, die wie der Bürstenhalter 25 einen rechteckigen Umriß hat. Die Leiterplatte 30 erstreckt sich im wesentlichen mit gleicher Breite wie der Bürstenhalter 25 mit ihrer größten Erstreckung quer zur Ankerwelle 17 des Ankers 14 und ist in axialer Richtung breiter als der Bürstenhalter 25, so daß zumindest der Kommutator 18 und beispielsweise auch der Magnetring 19 überdeckt werden.

Wie in Figur 2, einer teilweisen Schnittdarstellung einer Seitenansicht der Antriebsvorrichtung 1 nach Figur 1, näher dargestellt ist, umgreift der Bürstenhalter 25 mit seinen beiden Bürsten 26 zangenartig den Kommutator 18. Der Bürstenhalter 25 dient dabei auch zur Halterung der Leiterplatte 30, die mit radialem Abstand zum Kommutator 18 verläuft. Das Getriebegehäuse 10 ist von einem Getriebegehäusedeckel 32 verschließbar, der sich beispielsweise bis zum Polgehäuse 11 erstreckt. Der Bürstenhalter 25 und die Steckeraufnahme 28 sind zum Beispiel in Form eines einstückigen Bauteils ausgebildet, das beispielsweise in Kunststoffspritzgußtechnik hergestellt werden kann. Selbstverständlich kann der Bürstenhalter 25 und die Steckeraufnahme 28 auch separat auf der Leiterplatte 30 als einzelne Bauteile angeordnet werden, wie es in Figur 3, einer Draufsicht auf die Leiterplatte 30 in schematisch vereinfachter Darstellung eines zweiten erfindungsgemäßen Ausführungsbeispiels gezeigt wird.

Die Leiterplatte 30 enthält noch weitere Bauteile, wie zum Beispiel einen Varistor, der zur Stabilisierung der Spannung vorgesehen ist und hierzu einen elektrischen Widerstand aufweist, dessen Leitwert sich mit steigender Spannung erhöht. Außerdem ist noch ein Kondensator vorgesehen, der beispielsweise gemeinsam mit dem Varistor als sogenanntes Kombielement 35 auf der Leiterplatte 30 angebracht wird. Außerdem sind noch weitere Elemente vorgesehen, wie zum Beispiel zwei Entstördrosseln 36, die vorzugsweise in dem Kunststoff des Bürstenhalters 25 in hülsenförmigen Aufnahmen 27 im Bürstenhalter 25 untergebracht sind. Denkbar ist auch, die Entstördrosseln 36 separat auf der Leiterplatte 30 zu befestigen. Weitere Entstörelemente können als sogenannte SMD-Bauteile (surface mounted devices) auch auf der Leiterplatte 30 untergebracht sein, so daß eine manuelle Bestückung des Bauteilhalters 25 mit den Entstördrosseln 36 nicht erforderlich ist. Des weiteren ist zumindest ein Hall-Sensor 37 vorgesehen, der zum Beispiel innerhalb einer rechteckförmigen Aussparung 29 des Bürstenhalters 25 zwischen den Entstördrosseln 36 auf der Leiterplatte 30 untergebracht ist. Vorzugsweise sind zwei Hall-Sensoren 37 vorgesehen, die sich nach der Endmontage der Leiterplatte 30 in unmittelbarer Nähe zum Magnetring 19 befinden. Der Magnetring 19 weist an seinem Umfang verteilt zumindest einen permanentmagnetisierten Bereich auf, um mittels des zumindest einen Hall-Sensors 37 die aktuelle Stellung des Ankers 14 bzw. dessen Drehzahl erfassen zu können. Des weiteren kann die Leiterplatte 30 noch andere elektrische oder elektronische Bauelemente 38 aufweisen, die zum Beispiel zur Steuerung der Antriebsvorrichtung 1 und zur Auswertung der von den Hall-Sensoren 37 abgegebenen elektrischen Signale dienen.

Wie die Figur 4, einer perspektivischen Vorderansicht des Bürstenhalters 25 aus Figur 3, näher gezeigt wird, sind die beiden gegenüberliegenden Bürsten 26 in vorgesehenen Bürstenköchern 39 untergebracht. Über Federelemente 40 erfolgt eine entsprechende Vorspannung der Bürsten 26 in den Bürstenköchern 39 zum Kommutator 18 hin. An ihrer Rückseite gehen von den Bürsten 26 elektrische Leitungen 42 ab, die eine elektrische Verbindung zu den Entstördrosseln 36 herstellen. Die Entstördrosseln 36 weisen vom Bürstenhalter 25 abstehende elektrischen Anschlüsse 44 auf, die in entsprechende Öffnungen der Leiterplatte 30 eingeführt werden können, um dann über nicht näher dargestellte Kontaktbahnen auf der Leiterplatte 30 eine Kontaktierung mit den Bauteilen 35, 38 und der Steckeraufnahme 28 auf der Leiterplatte 30 zu ermöglichen. Die beiden Bürsten 26 werden an ihrer offenen Seite der Bürstenköcher 39 durch Rastnasen 45 in nicht montiertem Zustand des Bürstenhalters 25 gehalten, wie es bei der in Figur 4 rechts dargestellten Bürste 26 und den beiden in Figur 5 dargestellten Bürsten 26 der Fall ist. Wie die Figur 5, eine Rückansicht einer perspektivischen Darstellung des Bürstenhalters 25 aus Figur 4, näher zeigt, sind die Rastnasen 45 an entsprechenden Wippen 46 der Bürstenköchern 39 angebracht, so daß bei einer Betätigung der Wippen 46, zum Beispiel in Richtung eines in Figur 5 eingezeichneten Pfeils 48, eine entsprechende Bewegung der Rastnasen 45 weg von den Bürsten 26 und damit eine Entriegelung der Bürsten 26 erfolgt, die anschließend durch die Federkraft der Federelemente 40 aus ihren Bürstenköchern 39 herausbewegt werden.

Die Montage der Antriebsvorrichtung 1 erfolgt mittels der fertig bestückten Leiterplatte 30, die den Bürstenhalter 25 sowie alle weiteren Bauteile 28, 35, 36, 37, 38 enthält. Die Leiterplatte 30 wird, wie in Figur 1 dargestellt ist, in die bis auf die Leiterplatte 30 und den Getriebegehäusedeckel 32 ansonsten fertig montierte Antriebsvorrichtung 1 mit dem Bürstenhalter 25 voraus in die Ausnehmung 23 des Getriebegehäuses 10 eingefügt. Die Halterung des Bürstenhalters 25 in der Ausnehmung 23 erfolgt zum Beispiel durch leichtes Einpressen bzw. elastische Verspannung des Bürstenhalters 25 in der Ausnehmung 23. Erfindungsgemäss sind nicht näher dargestellte Nuten, Führungsflächen, Zentrierstifte in der Ausnehmung 23 des Getriebegehäuses 10 vorgesehen, die in Verbindung mit am Bürstenhalter 25 entsprechend korrespondierend ausgebildeten Rast- und/oder Führungselementen eine Halterung und darüber hinaus zum Beispiel eine Verrastung des Bürstenhalters 25 in der Ausnehmung 23 bewirken. Nach der Montage des Bürstenhalters 25 mit den innerhalb der Bürstenköcher 39 befindlichen Bürsten 26 bzw. der Leiterplatte 30 erfolgt anschließend das Entrasten der Bürsten 26, beispielsweise durch Betätigen der Rastnasen 45, wonach es zu einem Anliegen der Bürsten 26 am Kommutator 18 des Ankers 14 kommt, ohne daß eine Nachjustage des Bürstenhalters 25 erforderlich wäre.

Die Entrastung oder Entriegelung der Bürsten 26 kann zum Beispiel durch Einführen eines nicht näher dargestellten Stiftes in in Figur 3 angedeutete Öffnungen 52 an der dem Bürstenhalter 25 gegenüberliegenden Seite der Leiterplatte 30 erfolgen, so daß die in Figur 5 dargestellten Wippen 46 in Pfeilrichtung 48 entsprechend betätigt werden können. Selbstverständlich ist es auch möglich, die Entriegelung der Bürsten 26 über den Getriebegehäusedeckel 32 vorzunehmen, der hierzu zum Beispiel über zwei in Figur 2 dargestellte Stege 54 verfügt, die in die Öffnungen 52 der Leiterplatte 30 entsprechend eingreifen können. Möglich ist aber auch, wie in Figur 2 gestrichelt angedeutet ist, Stifte 55 oder dergleichen in der Ausnehmung 23 vorzusehen, die in in Figur 4 gezeigte Öffnungen 50 der Bürstenköcher 39 eingreifen können, die an der dem Kommutator 18 zugewandten Seite des Bürstenhalters 25 vorgesehen sind, so daß es nach dem vollständigen Einführen des Bürstenhalters 25 in der Ausnehmung 23 zu einem selbsttätigen Entriegeln der Bürsten 26 kommt. Anstelle der geschilderten Verriegelung bzw. Entriegelung der Bürsten 26 ist es auch möglich, wie es die in Figur 4 links dargestellte Bürste 26 zeigt, dem Kommutator 18 zugewandt, abgerundete oder auch abgeschrägte Flächen 58 an den Bürsten 26 vorzusehen, um beim radialen Aufschieben des Bürstenhalters 25 auf den Kommutator 18 ein Zurückschieben der aus den Bürstenköchern 39 herausstehenden Bürsten 26 ohne Verkanten zu ermöglichen.

## Patentansprüche

1. Antriebsvorrichtung, insbesondere zum Verstellen eines Schiebedachs eines Fahrzeugs, mit einem Elektromotor, der einen Anker mit Kommutator aufweist, welcher in einem Polgehäuse untergebracht ist, dessen außerhalb des Polgehäuses liegender Teil eine Getriebeantriebswelle für ein Getriebe bildet, das in einem an das Polgehäuse anschließenden Getriebegehäuse, das von einem Gehäusedeckel verschlossen ist, untergebracht ist, welches eine Leiterplatte aufnimmt, die einen Bürstenhalter trägt, dessen Bürsten am Kommutator des Ankers angreifen, wobei sich die Leiterplatte (30) mit ihrer größten Erstreckung quer zu einer Ankerwelle (17) des Ankers (14) erstreckt, wobei die Leiterplatte (30) den Kommutator (18) des mit seiner Getriebeantriebswelle (5) in das Getriebegehäuse (10) ragenden Ankers (14) im Getriebegehäuse (10) zumindest teilweise abdeckt, wobei der Bürstenhalter (25) zur Montage in radialer Richtung über den Kommutator (18) des im Getriebegehäuse (10) montierten Ankers (14) geschoben ist, **dadurch gekennzeichnet dass**, der Bürstenhalter (25) in eine im Bereich des Kommutators (18) vorgesehene Ausnehmung (23) im Getriebegehäuse (10) eingreift wobei Nuten, Führungsflächen, oder Zentrierstifte in der Ausnehmung (23) des Getriebegehäuses (10) angeordnet sind, die in Verbindung mit am Bürstenhalter (25) entsprechend korrespondierend ausgebildeten Rast- und/oder Führungselementen eine Halterung des Bürstenhalters (25) in der Ausnehmung (23) bewirken.

2. Antriebsvorrichtung nach Anspruch 1, **dadurch gekennzeichnet, daß** die Leiterplatte (30) eine rechteckförmige Form hat.

3. Antriebsvorrichtung nach Anspruch 1 oder 2, **dadurch gekennzeichnet, daß** der Bürstenhalter (25) einen Kontaktierungsabschnitt in Form einer Steckeraufnahme (28) aufweist, der Teil des Bürstenhalters (25) ist.

4. Antriebsvorrichtung nach Anspruch 1, **dadurch gekennzeichnet, daß** der Bürstenhalter (25) Entstördrosseln (36) aufweist, die im Bürstenhalter (25) integriert sind.

5. Antriebsvorrichtung nach Anspruch 4, **dadurch gekennzeichnet, daß** der Bürstenhalter (25) aus Kunststoff besteht und die Entstördrosseln (36) in hülsenförmigen Aufnahmen (27) im Kunststoff untergebracht sind.

6. Antriebsvorrichtung nach Anspruch 1, **dadurch gekennzeichnet, daß** der Bürstenhalter (25) Elemente (45, 46) aufweist, welche die Bürsten (26) zur Montage des Bürstenhalters (25) in einer Montagestellung innerhalb vorgesehenen Bürstenköchern (39) halten.

7. Antriebsvorrichtung nach Anspruch 1, **dadurch gekennzeichnet, daß** in der Ausnehmung (23) oder an einem Getriebegehäusedeckel (32) der Antriebsvorrichtung (1) Elemente (54; 55) vorgesehen sind, die zu einer Entriegelung der in Montagestellung innerhalb vorgesehenen Bürstenköchern (39) befindlichen Bürsten (26) im Bürstenhalter (25) führen.

8. Antriebsvorrichtung nach Anspruch 1, **dadurch gekennzeichnet, daß** dem Kommutator (18) zugewandte Flächen (58) der Bürsten (26) abgerundet oder abgeschrägt ausgebildet sind.

9. Antriebsvorrichtung nach Anspruch 1, **dadurch gekennzeichnet, daß** die Leiterplatte (30) zumindest einen Hall-Sensor (37) aufweist, der nach dem Einführen des Bürstenhalters (25) in die Ausnehmung (23) in unmittelbarer Nähe zu einem am Anker (14) vorgesehenen Magnetring (19) liegt.

10. Verfahren zur Herstellung einer Antriebsvorrichtung, nach einem der vorhergehenden Ansprüchen, **dadurch gekennzeichnet, dass**
- zuerst der Anker (14) im Polgehäuse (11) und im Getriebegehäuse (10) ohne Getriebegehäusedeckel (32) komplett montiert wird,
- erst danach eine Leiterplatte (30) mit einem darauf angeordneten Bürstenhalter (25) mit diesem voraus in eine Ausnehmung (23) des Getriebegehäuses (10) eingefügt wird,
- wobei der Bürstenhalter (25) radial auf einen auf der Getriebeantriebswelle (5) angeordneten Kommutator (18) aufgeschoben wird,
- und anschließend der Getriebegehäusedeckel (32) montiert wird.

## Claims

1. Drive apparatus, in particular for adjusting a sliding roof of a vehicle, comprising an electric motor which has an armature with a commutator, which is accommodated in a pole housing, whose part which is situated outside the pole housing forms a gear mechanism drive shaft for a gear mechanism which is accommodated in a gear mechanism housing which adjoins the pole housing and is closed by a housing cover which holds a printed circuit board which carries a brush holder whose brushes act on the commutator of the armature, with the largest extent of the printed circuit board (30) extending transverse to an armature shaft (17) of the armature (14), with the printed circuit board (30) at least partially covering the commutator (18) of the armature (14), which protrudes with its gear mechanism drive shaft (5) into the gear mechanism housing (10), in the gear mechanism housing (10), with the brush holder (25), for mounting purposes, being pushed in the radial direction over the commutator (18) of the armature (14) which is mounted in the gear mechanism housing (10), **characterized in that** the brush holder (25) engages in a recess (23), which is provided in the region of the commutator (18), in the gear mechanism housing (10), with grooves, guide surfaces or centring pins being arranged in the recess (23) in the gear mechanism housing (10) and, in conjunction with latching and/or guide elements which are accordingly correspondingly formed on the brush holder (25), causing the brush holder (25) to be held in the recess (23).

2. Drive apparatus according to Claim 1, **characterized in that** the printed circuit board (30) has a rectangular form.

3. Drive apparatus according to Claim 1 or 2, **characterized in that** the brush holder (25) has a contact-making section in the form of a plug receptacle (28) which is part of the brush holder (25).

4. Drive apparatus according to Claim 1, **characterized in that** the brush holder (25) has interference-suppression inductors (36) which are integrated in the brush holder (25).

5. Drive apparatus according to Claim 4, **characterized in that** the brush holder (25) is composed of plastic and the interference-suppression inductors (36) are accommodated in sleeve-like receptacles (27) in the plastic.

6. Drive apparatus according to Claim 1, **characterized in that** the brush holder (25) has elements (45, 46) which hold the brushes (26) in a mounting position within provided brush cartridges (39) in order to mount the brush holder (25).

7. Drive apparatus according to Claim 1, **characterized in that** elements (54; 55) are provided in the recess (23) or on a gear mechanism housing cover (32) of the drive apparatus (1), which elements lead to unlocking of the brushes (26) in the brush holder (25), which brushes are located in the mounting position within provided brush cartridges (39).

8. Drive apparatus according to Claim 1, **characterized in that** surfaces (58) of the brushes (26), which surfaces face the commutator (18), are rounded or bevelled.

9. Drive apparatus according to Claim 1, **characterized in that** the printed circuit board (30) brush holder (25) is inserted into the recess (23), is situated in the immediate vicinity of a magnet ring (19) which is provided on the armature (14).

10. Method for producing a drive apparatus according to one of the preceding claims, **characterized in that**
- the armature (14) is first completely mounted in the pole housing (11) and in the gear mechanism housing (10) without the gear mechanism housing cover (32),
- a printed circuit board (30) with a brush holder (25) arranged on it is only then inserted, with the said brush holder in front, into a recess (23) in the gear mechanism housing (10),
- with the brush holder (25) being pushed radially onto a commutator (18) which is arranged on the gear mechanism drive shaft (5),
- and the gear mechanism housing cover (32) then being mounted.

## Revendications

1. Dispositif d'entraînement, notamment pour actionner le toit ouvrant d'un véhicule, comprenant un moteur électrique dont l'induit est muni d'un collecteur, logé dans un boîtier polaire et dont la partie extérieure au boîtier polaire forme l'arbre d'entraînement d'une transmission logé dans un boîtier de transmission adjacent au boîtier polaire et fermé par un couvercle de boîtier, ce boîtier recevant une plaque de circuit portant un support de balais dont les balais sont appliqués contre le collecteur de l'induit,
la plaque de circuit (30) est disposée avec sa plus grande dimension transversalement à l'arbre (17) de l'induit (14),
la plaque de circuit (30) couvre au moins en partie le collecteur (18) de l'induit (14) pénétrant dans le boîtier de transmission (10) par son arbre d'entraînement de transmission (5),
le porte-balai (25) étant glissé pour le montage dans la direction radiale sur le commutateur (18) de l'induit (14) installé dans le boîtier de transmission (10),
**caractérisé en ce que**
le porte-balai (25) pénètre dans une cavité (23) du boîtier de transmission (10) prévue au niveau du collecteur (18), des rainures, surfaces de guidage et broches de centrage étant prévues dans la cavité (23) du boîtier de transmission (10), et constituant la fixation du porte-balai (25) dans la cavité (23) en liaison avec des éléments d'encliquetage et/ou de guidage correspondants réalisés sur le porte-balai (25).

2. Dispositif d'entraînement selon la revendication 1,
**caractérisé en ce que**
la plaque de circuit (30) a une forme rectangulaire.

3. Dispositif d'entraînement selon l'une des revendications 1 ou 2,
**caractérisé en ce que**
le porte-balai (25) comporte un segment de contact sous la forme d'une prise de connecteur (28) faisant partie du porte-balai (25).

4. Dispositif d'entraînement selon la revendication 1,
**caractérisé en ce que**
le porte-balai (25) comporte des bobines de déparasitage (36) intégrées au porte-balai (25).

5. Dispositif d'entraînement selon la revendication 4,
**caractérisé en ce que**
le porte-balai (25) est en matière plastique et les bobines de déparasitage (36) sont placées dans des logements en forme de manchons (27) dans la matière plastique.

6. Dispositif d'entraînement selon la revendication 1,
**caractérisé en ce que**
le porte-balai (25) comporte des éléments (45, 46) qui tiennent les balais (26) pour monter le porte-balai (25) en position de montage dans les carquois de balai (39).

7. Dispositif d'entraînement selon la revendication 1,
**caractérisé par**
des éléments (54, 55) prévus dans la cavité (23) ou sur le couvercle du boîtier de transmission (32) du dispositif d'entraînement (1), ces éléments permettant le déverrouillage des balais (26) prévus dans les carquois à balai (39) dans le porte-balai (25) en position de montage.

8. Dispositif d'entraînement selon la revendication 1,
**caractérisé en ce que**
les surfaces (58) des balais (26) tournées vers le collecteur (18) sont arrondies ou en biais.

9. Dispositif d'entraînement selon la revendication 1,
**caractérisé en ce que**
la plaque de circuit (30) comporte au moins un capteur Hall (37) qui, après introduction du porte-balai (25), se situe dans la cavité (23) à proximité immédiate d'une bague magnétique (19) prévue sur l'induit (14).

10. Procédé de fabrication d'un dispositif d'entraînement selon l'une des revendications précédentes,
**caractérisé en ce que**
- on installe tout d'abord complètement l'induit (14) dans le boîtier polaire (11) et dans le boîtier de transmission (10) sans couvercle de boîtier de transmission (32),
- ce n'est qu'ensuite que l'on introduit une plaque de circuit (30) avec un porte-balai (25) prévu sur la plaque, en position avant, dans une cavité (23) du boîtier de transmission (10),
- on glisse le porte-balai (25) radialement sur un commutateur (18) installé sur l'arbre d'entraînement de transmission (5) et
- on monte le couvercle du boîtier de transmission (32).
